# EUROPEAN PATENT APPLICATION

(11) **EP 4 475 406 A1**
(43) Date of publication of application: **11.12.2024**
(21) Application number: 23382555.3
(22) Date of filing: 07.06.2023
(51) Int. Cl.: H02K 15/00, H02K 16/00

(54) **METHOD FOR MANUFACTURING AN ELECTRIC GENERATOR FOR A WIND TURBINE, MODULAR ASSEMBLY, ELECTRIC GENERATOR FOR A WIND TURBINE, AND WIND TURBINE**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: SGRE-Association

(57) **Abstract**

Method for manufacturing an electric generator (7) for a wind turbine (1), comprising the following steps:
- providing a modular assembly (15) comprising a plurality of rotor modules (16, 17, 18), a plurality of rotor shafts (25), a plurality of stator modules (29, 30, 31), and a plurality of carrier components (36),
- manufacturing a rotor (10) of the electric generator (7) by mounting at least one of the rotor modules (16, 17, 18) to one of the rotor shafts (25),
- mounting the rotor (10) to at least one of the carrier components (36) such that the rotor can rotate around a rotation axis (6),
- mounting at least one of the stator modules (29, 30, 31) to this carrier component (36) such that this stator module (29, 30, 31) or these stator modules (29, 30, 31) realize a stator (11) of the electric generator (7).

## Description

The present invention relates to a method for manufacturing and electric generator for a wind turbine. Furthermore, the present invention relates to a modular assembly. Additionally, the present invention relates to an electric generator for a wind turbine. Finally, the present invention relates to a wind turbine.

Particularly for windfarms, different power levels for the electric generators of the respective wind turbines are required. These different output power levels can be realized by different designs for the respective electric generators, which, however, causes costs regarding the design, the validation and the certification of these generators.

It is an object of the present invention to provide an enhanced concept for the manufacturing process of electric generators for wind turbines.

According to the present invention, this object is solved by a method as described initially, wherein this method comprises the following steps:
- providing a modular assembly comprising a plurality of rotor modules, a plurality of rotor shafts, a plurality of stator modules, and a plurality of carrier components,
- manufacturing a rotor of the electric generator by mounting at least one of the rotor modules to one of the rotor shafts,
- mounting the rotor to at least one of the carrier components such that the rotor can rotate around a rotation axis,
- mounting at least one of the stator modules to this carrier component such that this stator module or these stator modules realize a stator of the electric generator.

The modular assembly which is used for the method according to the present invention comprises a set of several rotor modules, rotor shafts, stator modules, and carrier components, wherein specific components of this assembly are selected to manufacture the electric generator having specific properties. Particularly, one idea of the present invention is that the usage of the modular assembly allows it to manufacture electric generators with different properties, particularly different output powers, by using the respective components of the modular assembly. Particularly, it is possible that common and equal components, for instance rotor shafts and carrier components, are used for manufacture different generators, wherein different components, for instance rotor modules and stator modules, are used to realize respective different output powers of these generators. Hence, the process with respect to manufacture different electric generators is simplified and particularly also the respective costs are reduced, since the processes of the design, the validation and the certification are reduced significantly.

The rotor modules and one of the rotor shafts constitute the rotor. Concretely, one rotor module or several modules is or are mounted on the rotor shaft and to each other to realize the rotor. Each of the stator modules can realize the complete respective stator. Alternatively, the stator modules can realize a part of the stator such that several modules are mounted on the carrier component and to each other to constitute the stator.

The rotor shafts can be components having a longitudinal shape or extent, wherein the ends of the rotor shafts can be arranged in a bearing of the carrier component such that the longitudinal or axial direction of the rotor shaft defines the rotational axis of the respective electric generator. The rotor shafts are preferably made of a metal, particularly steel.

The carrier component can realize the or at least a great part of the mechanical stability of the respective electric generator. In a preferred embodiment, the carrier component is or realizes a housing of the respective electric generator. Hence, the stator and the rotor can be arranged within the carrier component or the housing, respectively. The carrier components are preferably made of a metal, particularly steel.

Regarding the steps of mounting the at least one of the rotor module to the respective rotor shaft and/or of mounting the at least one stator module to the respective carrier component, a screwing- and/or a bolting- and/or a welding connection can be realized. Particularly, a circular protrusion of the rotor shaft and circular protrusions of the rotor modules can be attached to each other.

Next, possible definitions of directions of the components of the modular assembly and the manufactured electric generator are provided. The direction pointing perpendicular away from the rotation axis can be defined as a radial direction. The direction pointing perpendicular away from the radial direction into the direction a point of the rotor which rotates around the rotation axis can be defined as the circumferential direction. The direction which extents parallel along the rotation axis can be defined as the axial direction.

Preferably, the at least one rotor module which is mounted radially outwards on the rotor shaft realizes an inner rotor, wherein the at least one stator module which is mounted radially inwards on the carrier component realizes an outer stator of the electric generator. Regarding the radial direction, the at least one rotor module which realizes the inner rotor is arranged closer to the rotation axis then the at least one stator module which realizes the outer stator. The electric generator to be manufactured can be a synchronous generator.

The module or the modules which realize the outer stator can comprise an axial cross section having a geometric shape of a circular ring or arc. These modules being arc-like can be arranged adjacently to each other to realize the complete stator being ring-like. The module or the modules which realize the inner rotor comprise an axial cross section having a U-like geometric shape. The opening of the U-shape can be point or directed radially inwards. In this embodiment, a space which is bordered radially outwards and laterally by the U-shape and radially inwards be the rotor shaft can realize a cooling channel of the respective rotor.

Either the rotor modules or the stator modules can be magnet modules comprising at least one permanent magnet, wherein the respective other modules are winding modules, wherein at least one winding section is arranged on the winding modules or the winding modules used for the electric generator to be manufactured, wherein the at least one winding section realizes at least a part of a generator winding of the electric generator. Regarding the electric generator to be manufactured, the permanent magnets and the generator winding electromagnetically interact with each other such that a movement of the rotor induces an electric current in the generator winding and/or such that an electric current in the generator winding causes a movement of the rotor. The generator winding can be a concentrated or a distributed generator winding. Each of the magnet modules can comprise a stack of laminated metal sheets, wherein the at least one permanent magnet is arranged within a recess provided in the stack. Additionally or alternatively, each of the winding modules can comprise a stack of laminated metal sheets

At least two of the magnet modules can comprise a different number of permanent magnets, wherein the permanent magnets of the magnet modules or of the magnet modules which comprises or comprise more than one permanent magnet can be arranged adjacently along and axial direction of the respective magnet module. In other words, the respective magnet module comprises at least one row of permanent magnets, wherein this row extents along the axial direction of this magnet module. Since several magnet modules have different numbers of permanent magnets, the total output power of the respective electric generator depends on the choice of the respective magnet module(s) .

The permanent magnets can comprise the same geometric extents, wherein each of the permanent magnets comprises an axial direction which extents parallel to the axial direction of the respective magnet module. Particularly, the permanent magnets can comprise a cuboidal and elongated shape, wherein the length, the width, and the height of the permanent magnets are equal to each other. The length of the respective permanent magnet can be the extent of this component regarding its axial direction.

In a preferred embodiment, the geometric extents of the magnet modules are equal to each other with respect to the radial direction and the circumferential direction, wherein the geometric extents of the magnet modules are different to each other with respect to the axial direction. This embodiment enhances the concept that common and equal components, particularly rotor shafts and carrier components, are used for manufacture different generators, wherein different rotor modules having only different axial lengths are used to realize respective different output powers of these generators.

The winding modules can comprise different axial extents, wherein the axial extents of the winding modules match the axial extents of the magnet modules. The axial extents of the winding modules and the axial extents of the magnet modules can be equal. In this embodiment, an optimized and effective electromagnetic interaction between the permanent magnets and the generator winding is ensured, if for the electric generator to be manufactured winding modules and magnet modules with matched axial extents are used. The winding sections which are mounted to the winding modules can comprise different axial extents, wherein the axial extents of the winding sections match the axial extents of the winding modules.

The rotor shafts and/or the carrier components can comprise the same axial extent, wherein this extent matches the axial extent of the magnet module or of the magnet modules comprising the largest number of permanent magnets. In this embodiment, independently from the desired output power of the electric generator to be manufactured, one of the, particularly equally constructed, rotor shafts and/or carrier components can be used, wherein the respective desired magnet module(s), and particularly winding module(s), can be used for manufacturing the respective electric generator. Concretely, the output power is larger, if the extent of the magnet modules and, hence, the number of the permanent magnets is larger. The higher the output power of the electric generator to be manufactured is, the smaller is an empty space within the housing. xxx

The object of the invention is furthermore solved by a modular assembly, comprising a plurality of rotor modules, a plurality of rotor shafts, a plurality of stator modules, and a plurality of carrier components, wherein the modular assembly is adapted to be used for the method according to the foregoing description. All aspects, particularly features and advantages, which have been explained with respect to the method according to the present invention can be transferred to the modular assembly according to the present invention and vice versa.

The object of the present invention is furthermore solved by an electric generator for a wind turbine, manufactured by a method according to the description above. All aspects, particularly features and advantages, which have been explained with respect to the method according to the present invention and/or with respect to the modular assembly according to the present invention can be transferred to the electric generator according to the present invention and vice versa.

The object of the present invention is furthermore sold by a wind turbine, comprising an electric generator according to the foregoing description. All aspects, particularly features and advantages, which have been explained with respect to the method according to the present invention and/or with respect to the modular assembly according to the present invention and/or with respect to the electric generator according to the present invention can be transferred to the wind turbine according to the present invention and vice versa.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a wind turbine according to an embodiment of the present invention, comprising an electric generator according to an embodiment of the present invention,
- Fig. 2: a modular assembly according to an embodiment of the present invention, wherein the electric generator of the wind turbine of Fig. 1 is manufactured according to a method according to an embodiment of the present invention using the modular assembly,
- Fig. 3: a cross-sectional view of a rotor module of the electric generator of the wind turbine of Fig. 1,
- Fig. 4: a cross-sectional view of a stator module of the electric generator of the wind turbine of Fig. 1, and
- Fig. 5: a view on an axial cut through the electric generator of the wind turbine of Fig. 1 according to three alternative realizations.

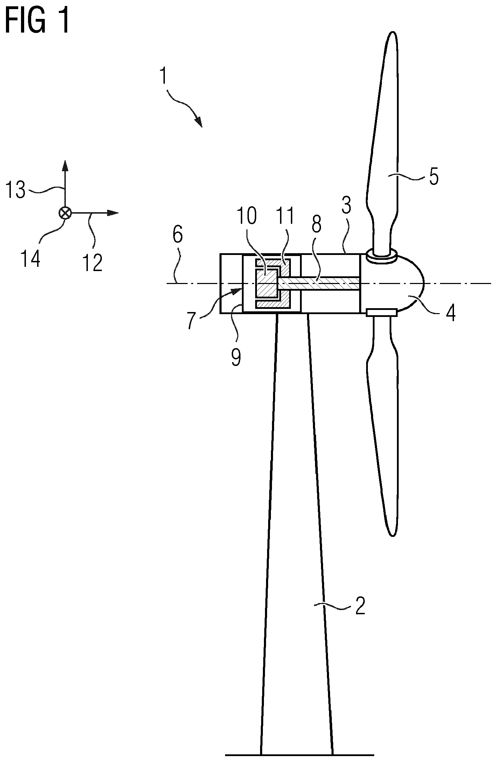

Fig. 1 shows a wind turbine 1 according to an embodiment of the present invention. The wind turbine 1 comprises a tower 2 on which a nacelle 3 is arranged. On the front of the nacelle 3, a hub 4 with several, particularly three, blades 5 is provided. The hub 4 is mounted such that it can rotate around a rotation axis 6. The wind-driven rotation of the hub 4 is transferred to an electric generator 7 according to an embodiment of the present invention which is located in the nacelle 3. The rotation of the hub 4 is transferred to the electric generator 7 by a main shaft 8 which extents along the rotation axis 6. The rotation axis 6 defines an axial direction 12 of the wind turbine 1 and the generator 7. The rotation axis 6 is arranged horizontally but can be also tilted with respect to the horizontal direction. While the total height of the wind turbine 1 is in the order of tens or hundreds of meters, the output power of the wind turbine 1 which is generated by the generator 7 can be in the range of multi-megawatts, particularly between 1 and 40 megawatts.

The electric generator 7 comprises an inner rotor 10 and an outer stator 11. The rotor 10 and the stator 11 are arranged within a housing 9 of the generator 7. While the stator 11 is non-rotatably mounted, a shaft (not shown in the figures) of the rotor 10 is connected with the main shaft 8 such that the rotation of the hub 4 is transferred to the rotor 10. Hence, the rotor 10 can rotate around the rotation axis 6.

Next, certain directions regarding the wind turbine 1 and the electric generator 7 and the components of the electric generator 7 are defined. The axial direction 12 extents along or parallel to the direction of the rotation axis 6. The direction pointing perpendicular away from the rotation axis 6 is defined as a radial direction 13. The direction pointing perpendicular away from the radial direction 13 into the direction a point of the rotor 11 which rotates around the rotation axis 6 is defined as a circumferential direction 14.

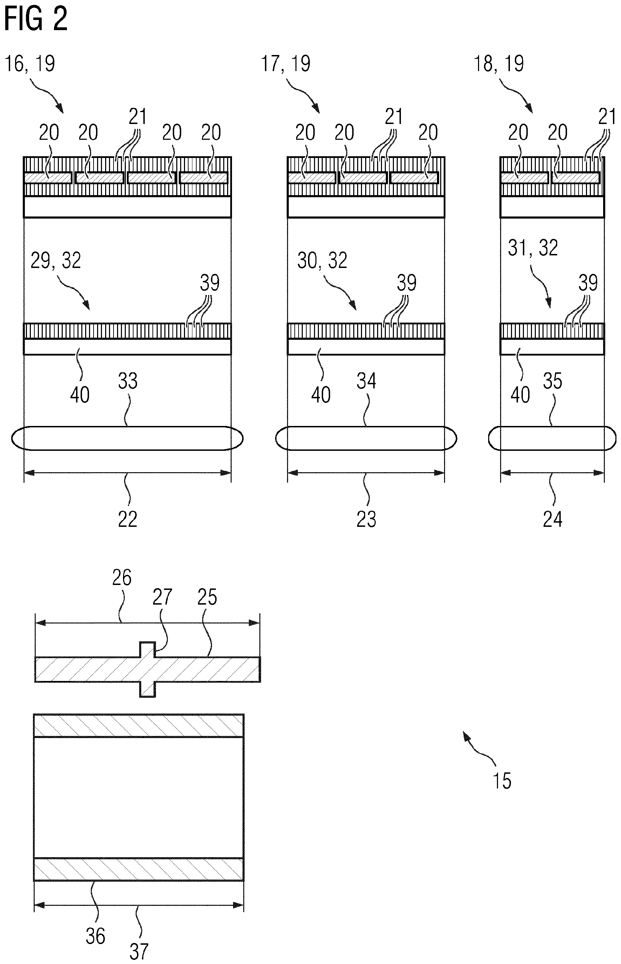

The electric generator is manufactured according to a method according to an embodiment of the present invention. In the first step of this method, a modular assembly 15 is provided, wherein some parts of the assembly 15 are shown in fig. 2. For constituting the rotor 10, the assembly 15 comprises a plurality of rotor modules 16, 17, 18, namely first rotor modules 16, second rotor modules 17, and third rotor modules 18. The rotor modules 16, 17, 18 are magnet modules 19, wherein each of the magnet modules 19 comprises at least one permanent magnet 20. The rotor modules 16, 17, 18 comprise a different number of permanent magnets 20.

Concretely, each of the first rotor modules 16 comprises exemplarily four permanent magnets 20, each of the second rotor modules 17 comprises exemplarily three permanent magnets 20, and each of the third rotor modules 18 comprises exemplarily two permanent magnets 20. The permanent magnets 20 of the respective magnet module 19 are arranged adjacently along the axial direction 12. The permanent magnets 20 comprise the same geometric extents, wherein each of the permanent magnets 20 comprises an elongated shape and, hence, an axial direction which extents parallel to the axial direction 12 of the respective magnet module 20.

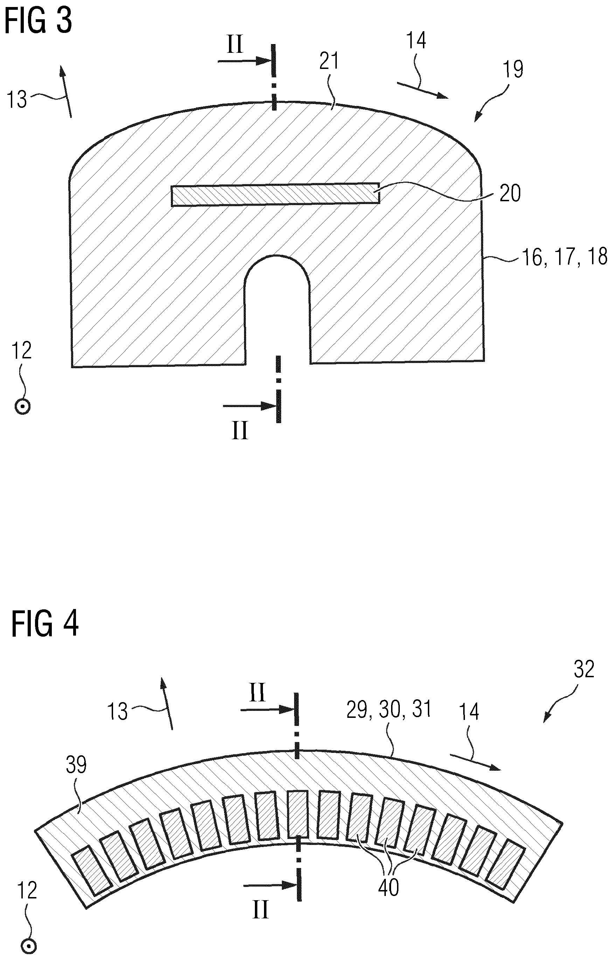

Fig. 3 shows a cross-sectional view of each of the rotor modules 16, 17, 18. It becomes apparent from figures 2 and 3 that each of the magnet modules 20 comprises a stack of laminated metal sheets 21, wherein each of the permanent magnets 20 is arranged within a recess provided in the stack. To attach the permanent magnet 20 in its designated position, the respective recess is filled with a resin. Each of the stator modules 16, 17, 18 comprises an axial cross section with a U-like geometric shape.

Furthermore, it becomes apparent from these figures that the geometric extents of the magnet modules 19 are equal to each other with respect to the radial direction 13 and the circumferential direction 14, wherein the geometric extents of the magnet modules 20 are different to each other with respect to the axial direction 12. Concretely, the first rotor module 16 has a first axial extent 22, the second rotor module 17 has a second axial extent 23 and the third rotor module 18 has a third axial extent 24. The axial extents 22, 23, 24 can be also denoted as axial lengths. The first axial extent 22 equals for example approximately four times the axial extent of one of the magnet modules 20, the second axial extent 23 equals approximately three times the axial extent of one of the magnet modules 20, and the third axial extent 24 equals approximately two times the axial extent of one of the magnet modules 20.

The modular assembly 15 furthermore comprises a plurality of rotor shafts 25, wherein fig. 2 shows one of the rotor shafts 25. All rotor shafts 25 comprise the same axial extent 26, wherein the extent 26 matches the first axial extent 22 of the magnet modules 19 comprising the largest number of permanent magnets 20, namely of the first rotor modules 16. Concretely, the axial extent 26 of the rotor shaft 25 is a bit larger than the first axial extent 22 of the first rotor modules 16 such that the axial end faces of the rotor shaft 25 can be arranged in a bearing of a housing of the electric generator 7. All rotor shafts 25 of the modular assembly 15 are identical.

Regarding the manufacture of the inner rotor 10, either the first rotor modules 16 or the second rotor modules 17 or the third rotor modules 18 are mounted radially outwards to one of the rotor shafts 25. The choice whether the first, the second or the third rotor modules 16, 17, 18 are mounted to the rotor shaft 25 depends on the required total output power of the electric generator 7 to be manufactured.

The U-shape of the respective rotor modules 16, 17, 18 are open radially inwards such that a space which can realize a cooling channel can be limited by the U-shape and a surface of the rotor shaft 25. For attaching the rotor modules 16, 17, 18 to the respective rotor shaft 25, a circular protrusion 27 of the rotor shaft 25 and circular protrusions 28 of the rotor modules 16, 17, 18 are attached to each other.

The assembly 15 furthermore comprises a plurality of stator modules 29, 30, 31, namely first stator modules 29, second stator modules 30, and third stator modules 31. The stator modules 29, 30, 31 are winding modules 32. Fig. 4 shows a cross-sectional view of each of the stator modules 29, 30, 31. It becomes apparent from figures 2 and 4 that each of the winding modules 32 comprises a stack of laminated metal sheets 39, wherein, radially inwards, teeth are provided along the circumferential direction 14, wherein slots 40 are laterally limited by the teeth. Within the slots 40, generator windings which electromagnetically interact with the permanent magnets 20 of the produced electric generator 7 are arranged.

As it becomes apparent from fig. 2, the stator modules 29, 30, 31 comprise different axial extents, wherein the axial extents of the stator modules 29, 30, 31 match the axial extents of the rotor modules 16, 17, 18. Concretely, the first stator module 29 comprises a first axial extent which is equal to the first axial extent 22 of the first rotor module 16, the second stator module 30 comprises a second axial extent which is equal to the second axial extent 23 of the first rotor module 17 and the third stator module 31 comprises a third axial extent which is equal to the third axial extent 24 of the third rotor module 18. Furthermore, the geometric extents of the winding modules 32 are equal to each other with respect to the radial direction 13 and the circumferential direction 14 (see fig. 4).

Each of the stator modules 29, 30, 31 which realizes the outer stator 11 comprise an axial cross section having a geometric shape of a circular ring or arc. Hence, to realize the stator 11, these modules 29, 30, 31 are arranged adjacently to each other along the circumferential direction 14 to realize the ring-like stator 11.

Regarding the generator windings, each of the winding modules 32 is connected with at least one winding section 33, 34, 35 of the modular assembly 15, wherein each of the winding sections 33, 34, 35 realizes a part of the generator winding. The winding sections 33, 34, 35 comprise different axial extents, wherein the first winding section 33 comprises a first axial extent which matches the first axial extent 22 of the first modules 16, 29, the second winding section 34 comprises a second axial extent which matches the second axial extent 23 of the second modules 17, 30, and the third winding section 35 comprises a third axial extent which matches the third axial extent 24 of the third modules 18, 31. Concretely, the axial extents of the winding sections 33, 34, 35 is a bit larger than the respective axial extent 22, 23, 24 such that the winding sections 33, 34, 35 can be wound around one of the teeth such that an axial end section of the winding sections 33, 34, 35 protrudes over the axial end face of the respective stator module 29, 30, 31.

The modular assembly 15 furthermore comprises a plurality of carrier components 36 with the same axial extent 37, wherein the extent 37 matches the first axial extent 22 of the first rotor modules 16 which comprise the largest number of permanent magnets 20. Concretely, the axial extent 37 of the carrier components 36 is a bit larger than the first axial extent 22 of the first rotor modules 16 such that between facial front ends of the respective rotor modules 16 and inner facial front ends of the respective carrier component 36 a gap 38 remains which can realize a cooling air chamber of the electric generator 7 to be manufactured. Each of the carrier components 36 realizes a hollow-cylindrical housing of the electric generator 7 to be manufactured. All carrier components 36 of the modular assembly 15 are identical.

After the rotor 10 has been manufactured by mounting the respective rotor modules 16, 17, 18 to one of the rotor shafts 25, particularly by screwing- and/or bolting- and/or welding connections, the rotor 10 is mounted to one of the carrier components 36 such that the rotor 10 can rotate around the rotation axis 6. Concretely, the axial end faces of the rotor 10 are mounted to bearings of the carrier component 36 which are not explicitly shown in the figures. After the winding sections 33, 34, 35 have been mounted to the respective stator module 29, 30, 31, the respective the stator modules 29, 30, 31 are mounted to this carrier component 36 such that these stator modules 29, 30, 31 realize the stator 11 of the electric generator 7. The stator modules 29, 30, 31 are attached to an inner surface of the carrier component 36 by screwing- and/or bolting- and/or welding connections. Next, the winding sections 33, 34, 35 are electrically connected with each other to realize the generator winding.

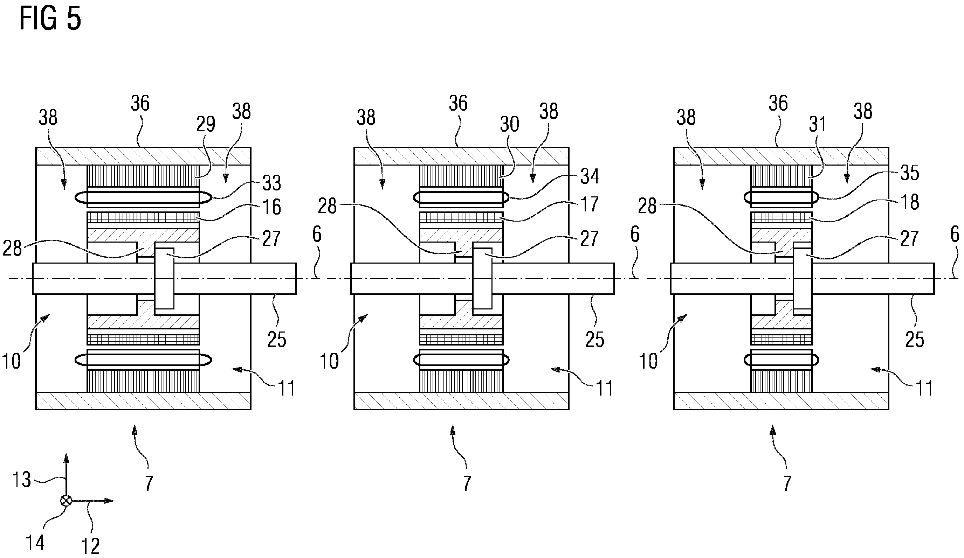

Fig. 5 shows three alternatives for electric generators 7 which can be manufactured by the method described above using the modular assembly 15. The electric generators 7 according to these three alternatives comprise equal rotor shafts 25 and equal carrier components 36. However, the electric generators 7 according to these three alternatives comprise different rotors 10 and stators 11 having different axial lengths. Regarding the electric generator 7 shown on the left side in fig. 5, this generator 7 comprises a rotor 10 which has been manufactured using the first rotor modules 16 and a stator 11 which has been manufactured using the first stator modules 29. Regarding the electric generator 7 shown in the middle of fig. 5, this generator 7 comprises a rotor 10 which has been manufactured using the second rotor modules 17 and a stator 11 which has been manufactured using the second stator modules 30. Regarding the electric generator 7 shown on the right side in fig. 5, this generator 7 comprises a rotor 10 which has been manufactured using the third rotor modules 18 and a stator 11 which has been manufactured using the third stator modules 31. Since the lengths of the active parts of these electric generators 7, i.e., the rotor 10 and the stator 11, are different, the total output power of these electric generators 7 are different.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Method for manufacturing an electric generator (7) for a wind turbine (1), comprising the following steps:
- providing a modular assembly (15) comprising a plurality of rotor modules (16, 17, 18), a plurality of rotor shafts (25), a plurality of stator modules (29, 30, 31), and a plurality of carrier components (36),
- manufacturing a rotor (10) of the electric generator (7) by mounting at least one of the rotor modules (16, 17, 18) to one of the rotor shafts (25),
- mounting the rotor (10) to at least one of the carrier components (36) such that the rotor can rotate around a rotation axis (6),
- mounting at least one of the stator modules (29, 30, 31) to this carrier component (36) such that this stator module (29, 30, 31) or these stator modules (29, 30, 31) realize a stator (11) of the electric generator (7).

2. Method according to claim 1, **characterized in that** the at least one rotor module (16, 17, 18) which is mounted radially outwards on the rotor shaft (25) realizes an inner rotor (10), wherein the at least one stator module (29, 30, 31) which is mounted radially inwards on the carrier component (35) realizes an outer stator (11) of the electric generator (7) .

3. Method according to claim 2, **characterized in that** the module (16, 17, 18, 29, 30, 31) or the modules (16, 17, 18, 29, 30, 31) which realize the outer stator (11) comprise an axial cross section having a geometric shape of a circular ring or arc and/or that the module (16, 17, 18, 29, 30, 31) or the modules (16, 17, 18, 29, 30, 31) which realize the inner rotor (10) comprise an axial cross section having a U-like geometric shape.

4. Method according to one of the preceding claims, **characterized in that** either the rotor modules (16, 17, 18) or the stator modules (29, 30, 31) are magnet modules (19) comprising at least one permanent magnet (20), wherein the respective other modules (16, 17, 18, 29, 30, 31) are winding modules (32), wherein at least one winding section (33, 34, 35) is arranged on the winding modules (32) or the winding modules (32) used for the electric generator (7) to be manufactured, wherein the at least one winding section (33, 34, 35) realizes at least a part of a generator winding of the electric generator (7).

5. Method according to claim 4, **characterized in that** at least two of the magnet modules (19) comprise a different number of permanent magnets (20), wherein the permanent magnets (20) of the magnet module (19) or of the magnet modules (19) comprising more than one permanent magnet (20) are arranged adjacently along an axial direction (12) of the respective magnet module (20).

6. Method according to claim 5, **characterized in that** the permanent magnets (20) comprise the same geometric extents, wherein each of the permanent magnets (20) comprises an axial direction which extents parallel to the axial direction (12) of the respective magnet module (19).

7. Method according to claim 6, **characterized in that** the geometric extents of the magnet modules (19) are equal to each other with respect to a radial direction (13) and a circumferential direction (14), wherein the geometric extents of the magnet modules (19) are different to each other with respect to the axial direction (12).

8. Method according to claim 7, **characterized in that** the winding modules (29, 30, 31) comprise different axial extents, wherein the axial extents of the winding modules (29, 30, 31) match the axial extents (22, 23, 24) of the magnet modules (19).

9. Method according to claim 8, **characterized in that** the winding sections (33, 34, 35) which are mounted to the winding modules (29, 30, 31) comprise different axial extents, wherein the axial extents of the winding sections (33, 34, 35) matches the axial extents of the winding modules (29, 30, 31).

10. Method according to claim 5 to 9, **characterized in that** the rotor shafts (25) and/or the carrier components (36) comprise the same axial extent (26, 37), wherein this extent (26, 37) matches the axial extent (32) of the magnet module (19) or of the magnet modules (19) comprising the largest number of permanent magnets (20).

11. Method according to claim 4 to 10, **characterized in that** each of the magnet modules (19) comprises a stack of laminated metal sheets (21), wherein the at least one permanent magnet (20) is arranged within a recess provided in the stack.

12. Method according to one of the preceding claims, **characterized in that** the carrier component (36) realizes a housing of the electric generator (7).

13. Modular assembly, comprising a plurality of rotor modules (16, 17, 18), a plurality of rotor shafts (25), a plurality of stator modules (29, 30, 31), and a plurality of carrier components (36), wherein the modular assembly (15) is adapted to be used for the method according to one of the preceding claims.

14. Electric generator, manufactured by to a method according to one of the claims 1 to 12.

15. Wind turbine, comprising an electric generator (7) according to claim 14.
